# EUROPEAN PATENT SPECIFICATION

(11) **EP 2 341 998 B1**
(45) Date of publication and mention of the grant of the patent: **12.11.2014**
(21) Application number: 09799383.6
(22) Date of filing: 04.09.2009
(51) Int. Cl.: B01D 29/33, B01D 29/48, B01D 29/64, B01D 29/66

(54) **METHOD AND DEVICE FOR CLEANING A FILTER FOR FLUIDS**
VERFAHREN UND VORRICHTUNG ZUR REINIGUNG EINES FILTERS FÜR FLÜSSIGKEITEN
PROCEDE ET DISPOSITIF DE NETTOYAGE D'UN FILTRE POUR FLUIDES

(30) Priority: 04.09.2008 IT PI20080085
(43) Date of publication of application: 13.07.2011
(73) Proprietor: Fomat S.R.L., 55100 - Lucca (IT)
(72) Inventor: GIANNELLI, Bruno, 55100 - Lucca (IT)
(74) Representative: Celestino, Marco
(86) International application number: PCT/IB2009/006760
(87) International publication number: WO 2010/026476

(56) References cited:
- EP-A- 0 494 800
- WO-A-99/32209
- DE-A1- 4 341 515
- DE-A1- 19 630 652
- DE-C- 34 056
- DE-U1- 29 519 626
- US-A- 1 199 350
- US-B1- 6 187 177

## Description

### Field of the invention

The present invention relates to fluid filtration and, in particular, to a method for cleaning fluid filters that are intended for use in various industrial fields, for example, in paper industry.

The invention concerns, furthermore, a device for carrying out the method.

### Description of the technical problem

In the paper industry, but also in other industrial fields where process fluids are used, the need arises of carrying out a filtering step while recirculating process water or fluids. To this purpose, the fluid, for instance water, passes through a dedicated regeneration circuit in which it is filtered and depurated from residues that the fluid has collected during the production cycle, in such a way that the fluid can be reused. Such a system, besides improving the production cycle, allows a remarkable saving of the water or other process fluid.

According to a general principle, such filtering circuits provide the following steps: the liquid to be filtered enters a filtering device where a filter cartridge is present, which has a determined filtration degree, which is chosen to retain the impurities and the residues that are present in the fluid; once filtered, the fluid continues its way through the production plant.

However, after a certain operating time, filter functionality and efficiency fall down, since an increasing amount of impurities and residues piles up on the filter surface. For example, in the papermaking industry field, the filter has to stop impurities that are difficult to be removed, due to the nature of paper fibres, in the form of threads and elongated particles, as they are produced in the paper process. Therefore, a replacement or a deep cleaning step of the filter is necessary.

Various industrial filters cleaning devices are known which provide, at first, inverting the flow of the fluid that recirculates within the circuit, in such a way that that the back pressure and force of the fluid detaches the residues from the filter cartridge, in order to restore its effectiveness for further filtering cycles. However, this system cannot adequately clean the filter, since such residues, which comprise the above-mentioned paper fibres, is firmly retained by the walls of the filter. In such a circumstance, a simple flow inversion is not suitable for removing the debris.

Therefore, scraping systems have been developed, in which specific control units decide how and when to clean the filter, by rotating a shaft within the filter cartridge, said shaft equipped with scrapers, depending upon the type of application. Instead, other types of scrapers, as described in US6187177, are arranged outside the filter cartridge, and carry out a similar rotational movement about it.

Both types of scraping systems, however, are structurally complicated and expensive, since movable elements must be provided inside or outside the cartridge, which must have close tolerances and minimal backlash with respect to it, in order to ensure a suitable cleaning effectiveness. Furthermore, the scrapers inside the cartridge limit the flow inversion effects, since they reduce the throughput of the fluid that flows within the cartridge itself. In particular, the scrapers do a 360° rotation about the filter cartridge, and as a consequence prolong the backwash time with remarkable water loss and additional costs.

WO9932209 describes a filter cleaning device according to the precharacterising part of claim 1. However, in the case of fibrous residues, which may occur in the case of paper and tissue making processes, such a filter cleaning device cannot work effectively. In fact, the fibrous residues of the paper or of a tissue penetrate and travel inside filter cartridge holes or apertures, and create a thick and stiff fibrous network that the scraping means, even with flow inversion, cannot remove completely.

In DE4341515 a filter for liquids is provided for highly viscous media having a cylindrical filter cartridge within a vertically arranged filter housing which has an inlet and an outlet. The viscous media flows through the filter insert from the outside in chamber, depositing a gradually thickening layer of particles. Particles are scraped from the outside of the filter cartridge from time to time and escape through an outlet at the base of the filter housing. The filter housing can be rotated with respect to the filter insert to move a particle wiper across the face of the filter insert. This solution does not permit a sufficient resilient reaction of the blade, and moreover, as the blade is worn, the wiping action becomes insufficient.

Therefore, the need is felt of providing a filter cleaning device that solves the above-described technical problem.

### Summary of the invention

It is therefore a general object of the present invention to provide a fluid filter cleaning device that improves its efficiency and efficacy with respect to the known devices, and that reduces the amount of back-washing water to be discharged.

It is a further object of the present invention to provide a fluid filter cleaning device that has a simple construction, and achieves a long-term reliability.

It is also a feature of the present invention to provide a method for cleaning a fluid filter that attains the same objects.

These and other objects are achieved by a fluid filter comprising:
- a filtering chamber having an inlet mouth through which a fluid to be filtered is introduced and an outlet mouth through which a filtered fluid exits;
- a filter cartridge that has an outer side surface and an inner side surface, said cartridge arranged in said filtering chamber such that said fluid to be filtered, which comes from said inlet mouth, passes through said filter cartridge entering from said outer side surface and exiting from said inner side surface as filtered fluid and reaches then said outlet mouth, said cartridge having a plurality of filtering passages that are sized such that residues present in said fluid to be filtered do not pass and are blocked on said outer side surface,
- a flow-reversing means for reversing a flow of said fluid such that, in a cleaning step, said fluid temporarily comes from said outlet mouth and passes through said filter cartridge in a direction that extends from said inner side surface towards said outer side surface in order to cause a partial disengagement of the residues from said outer side surface;
wherein an external scraping means is provided, said external scraping means movable with respect to said filter cartridge, wherein said scraping means is adapted to perform an alternate scraping movement according to two opposite directions along said outer side surface, said scraping means adapted to co-operate with said flow-reversing means in such a way that said residues, which are piled up on said outer surface of said filter cartridge are completely detached from said outer surface,
wherein the scraping means comprises a plurality of resiliently flexible elements that are arranged in contact with said outer surface in order to resiliently bend thus developing a resilient force that increases the scraping efficiency for removing said residues;
wherein the plurality of resiliently flexible elements are a plurality of scraping blades formed as a scraping blade tool; the flexible overlapping blades having radial cuts that are shifted from each other, to prevent discontinuity in the scraping action, and wherein
the scraping blades of the scraping blade tool have a scraping edge whose diameter is shorter than a filter cartridge diameter, and are arranged in such a way that an elastic reaction force that is normal to the outer surface of said filter cartridge is generated that, when said blades reach said filtering passages, provide a resilient click and a subsequent hit of said scraping edge against a nearby portion of said cartridge, shaking piled-up residues off and clearing said filtering passage.

This way, the combination of reversing the flow and the inverting the movement of the scraping means along the outer surface causes all the residues that accumulate on the cartridge to be removed and dragged away by the reversed flowing fluid, in particular within the filtering passages, even in case of interwoven threads or fibrous residues. Furthermore, the offset position of the scraping means does not decrease the fluid throughput within the filter cartridge, and the fluid reversing effects are therefore maintained. In addition, filter construction is less complicated, since there is no need of moving mechanisms within the filter.

Advantageously, the speed of said alternated scraping movement, with which said flexible elements move on said filter cartridge, is set between 0.1 m/s and 0.8 m/s, preferably between 0.2 m/s and 0.6 m/s, in particular between 0.4 m/s and 0.5 m/s.

In particular, said plurality of resiliently flexible elements is adapted to move:
- from a working position, in which said flexible elements are brought into contact with said outer side surface of said filter cartridge,
- to a resting position, in which said resiliently flexible elements are disengaged from said filter cartridge.

Advantageously, in said resting position said plurality of resiliently flexible elements is adapted to engage with a recess that has a diameter which is shorter than the diameter of said outer side surface of said filter cartridge. This way, the elastic elements recover their original position and shape, without undergoing a permanent deformation which would reduce their resilience. So, at the resting position, the resiliently flexible elements are at rest and do not acquire any deformation due to forced contact with the outer side surface of the filter cartridge. Therefore, the resiliently flexible elements, in the working position, are always effective to remove the residues that have piled up on the filter. In addition, this arrangement allows remarkable prolongation of the useful life of such elements.

Advantageously, said filtering chamber has, furthermore, a discharge mouth such that, while said flow is reversed, said fluid passes through said outlet mouth towards said discharge mouth.

In particular, the scraping means are operated immediately before or contemporaneously to said fluid-reversing means. In the latter case, a maximum cleaning effect is achieved since the residues, while being detached from the outer surface by the resilient blades, are dragged away by the same fluid.

Advantageously, said plurality of resiliently flexible elements are blades that are arranged to form a pack, such that a multiple scraping is possible along said outer side surface of said cartridge.

Furthermore, said blades are arranged next to each other on a same plane, to sweep all around said filter cartridge. This way, the blades act at the same time on the whole outer surface of the filter cartridge.

Advantageously, said filter cartridge has a cylindrical shape and said blades define a substantially circular scraping blade tool that has a scraping edge whose diameter is shorter than said filter cartridge diameter. This way, a higher interference with the outer surface of the cartridge is obtained and, in particular, at every holeof the filter cartridge, the blades have a resilient click that beats the hole and removes the residues held within the filtering passages. Furthermore, the interference between the walls of the outer surface of the cartridge and the blades increases the useful life of the blades, which keep a higher efficiency than the prior scraping blades art throughout the many production cycles, even if they are worn by the use. This provides for a cost-related advantage, since a less frequent blade change is needed.

Advantageously, said flexible blades are shifted from each other, to avoid a scraping action discontinuity.

In particular, said scraping movement of said scraping means is carried out by an actuating means, a scraping means-holding carriage being provided that is operated by said actuating means, a sliding guide being also provided whose axis is substantially parallel to said filter cartridge axis that guides said carriage and said plurality of blades along said outer surface of said filter cartridge. This way, a high scraping precision is ensured along the outer surface of the cartridge and, therefore, a higher residue-removing efficiency is achieved. Moreover, a homogeneous and uniform wear of the blades is obtained during the cleaning steps.

According to another aspect of the invention, a method for cleaning a fluid filter comprises the steps of:
- introducing a fluid to be filtered in a filtering chamber through an inlet mouth and discharging a filtered fluid through an outlet mouth;
- causing said fluid to be filtered to pass through a filter cartridge that has an outer side surface and an inner side surface, said cartridge arranged in said filtering chamber such that said fluid to be filtered, which comes from said inlet mouth, enters from said outer side surface and exits from said inner side surface as filtered fluid and reaches then said outlet mouth, said cartridge having a plurality of filtering passages to retain on said outer side surface residues that are present in said fluid to be filtered,
- reversing the flow of said filtered fluid such that, in a cleaning step, said filtered fluid temporarily comes from said outlet mouth and passes through said filter cartridge in a direction that extends from said inner side surface towards said outer side surface;
wherein a step is provided of externally scraping said filter cartridge, wherein said scraping step is carried out as an alternated scraping movement according to two opposite directions along said outer side surface, said scraping step adapted to co-operate with said flow-reversing step in such a way that said residues, which are piled up on said outer surface of said filter cartridge, are detached from said outer surface,
characterised in that said scraping step provides that a plurality of resiliently flexible elements are brought into contact with said outer surface and that said resiliently flexible elements of said scraping blade tool have a scraping edge whose diameter is shorter than a filter cartridge diameter and provide a bending movement that develops an elastic reaction force normal to the outer surface of the filter cartridge such that, when the blades reach the filtering passages, provide a resilient click and a subsequent hit of said scraping edge against a nearby portion of the cartridge, shaking piled-up residues off and clearing said filtering passage increasing the residue-removing efficiency of said scraping step.

Advantageously, said scraping step, during which said flexible elements move on said filter cartridge, is carried out at a speed set between 0.1 m/s and 0.8 m/s, preferably between 0.2 m/s and 0.6 m/s, in particular between 0.4 m/s and 0.5 m/s.

In particular, a working step is provided in which said resiliently flexible elements engage with said outer side surface of said filter cartridge, and a resting step is also provided in which said resiliently flexible elements are disengaged from said filter cartridge.

Advantageously, said flow-reversing step is carried out through said outlet mouth towards a discharge mouth that is made in said filtering chamber.

In particular, said scraping step is carried out immediately before or contemporaneously to said fluid flow-reversing step.

### Brief description of the drawings

Further characteristic and advantages of the present invention will be made clearer with the following description of an exemplary embodiment thereof, exemplifying but not limitative, with reference to the attached drawings, in which:
- Fig. 1 shows a perspective view of a filtering unit in which three filters are provided, according to the invention;
- Fig. 2 shows an elevational side view of the filtering unit of Fig. 1 with a cross sectional view of the filter;

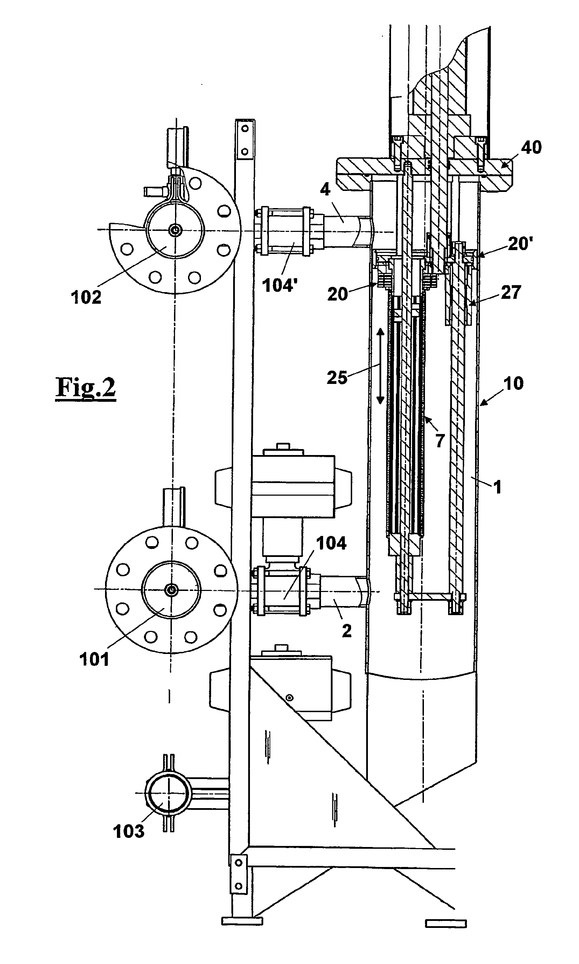

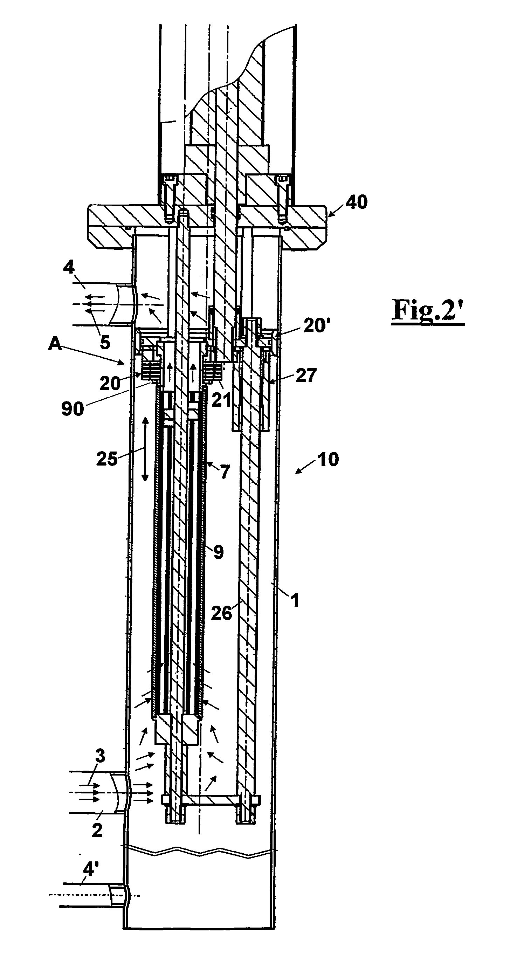

- Fig. 2' shows a cross sectional view of a filtering chamber that is equipped with an external scraping means, according to the invention;

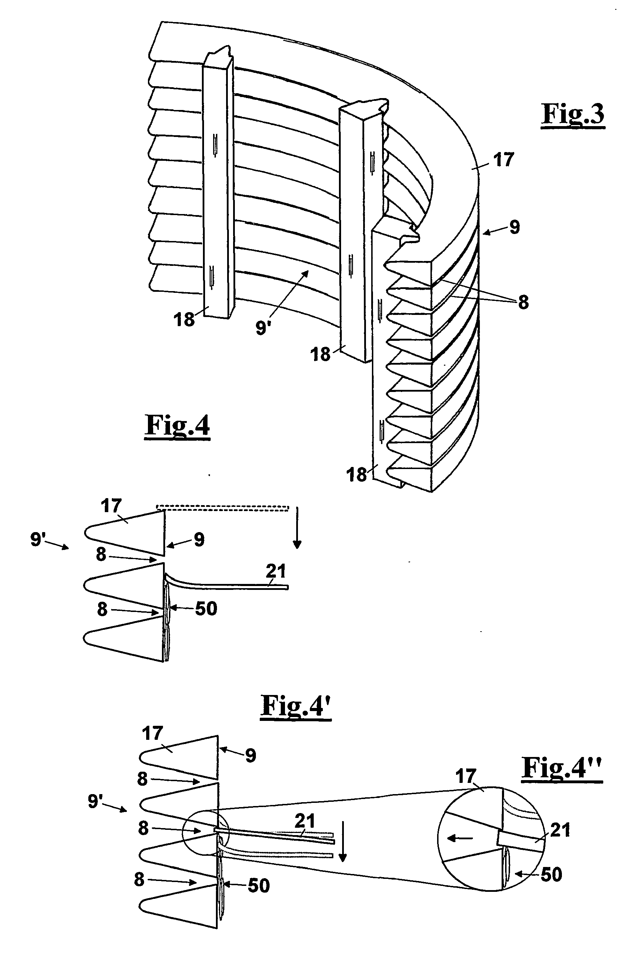

- Fig. 3 shows an enlarged view of a cross section of the filter cartridge;
- Figs. 4, 4' and 4" show a time succession of the different steps during which the scraping elements slide along the filter cartridge;

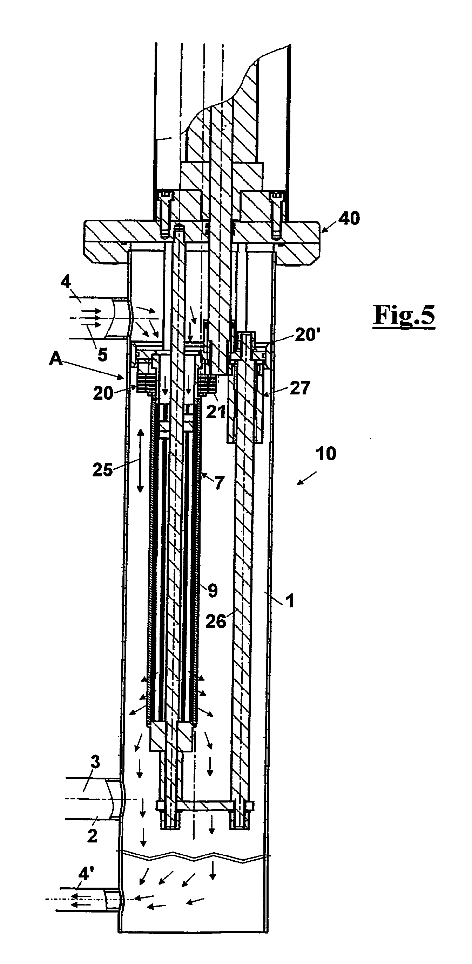

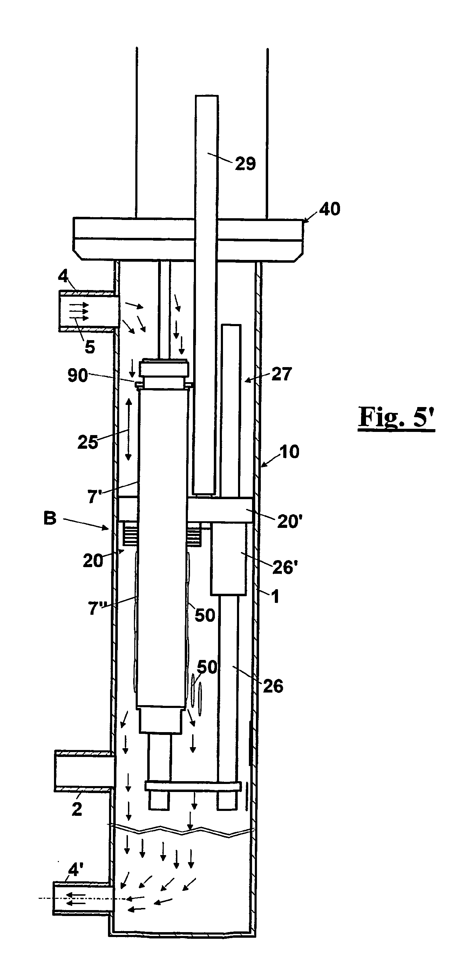

- Fig. 5 shows a cross sectional view of the filtering chamber, where backwashing flow is indicated;
- Fig. 5' shows a cross sectional view of the filtering chamber and the external scrapers operation, according to the invention;

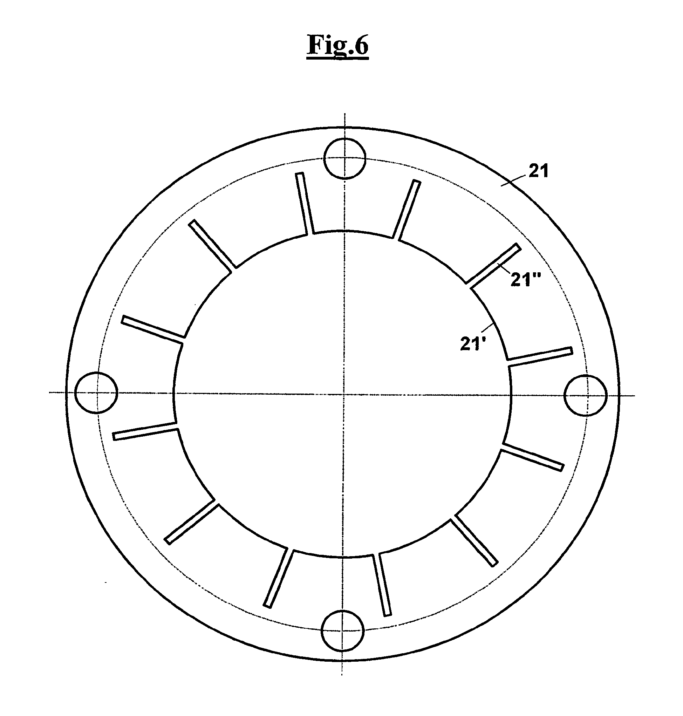

- Fig. 6 shows a top plan view of a scraping blade, according to the invention;

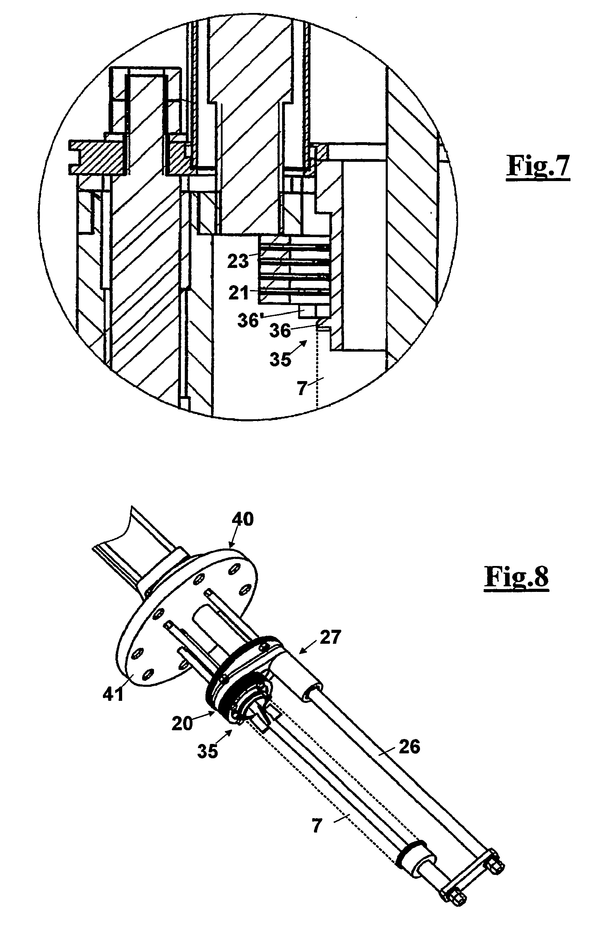

- Fig. 7 shows an enlarged view of the blades within the filtering chamber;
- finally, Fig. 8 shows a perspective view of a cartridge-holding support that can be extracted from the filtering chamber.

### Description of a preferred embodiment

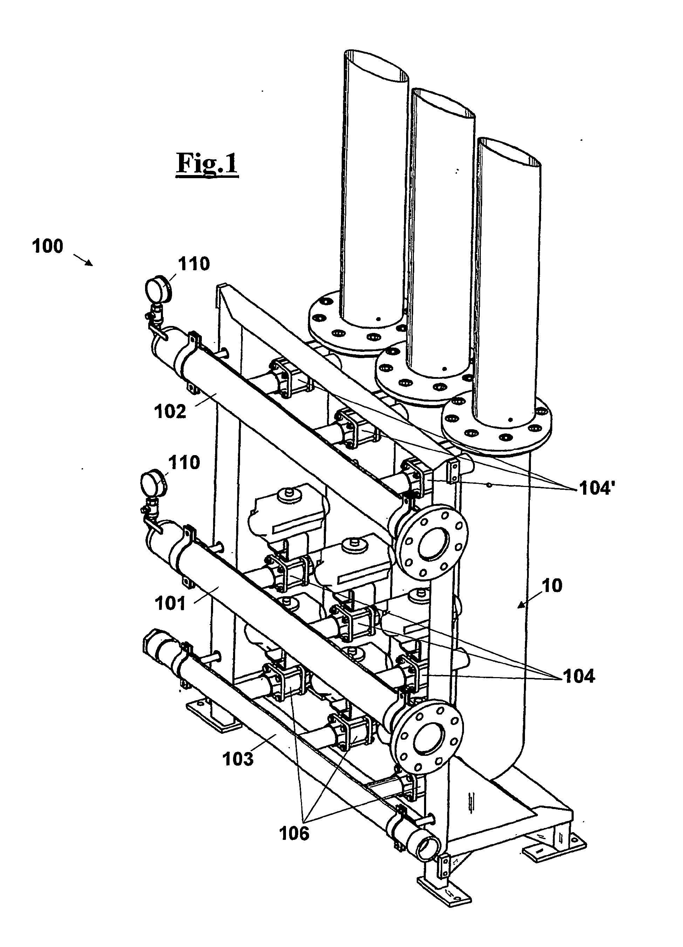

With reference to Fig. 1, a filtering unit 100 is shown which comprises a plurality of fluid filters 10. In particular, each filter 10 can be operated independently and is fed through a main inlet duct 101 from which corresponding secondary inlet ducts 2 extend (Fig. 2), through which a fluid to be filtered 3 flows. Similarly, at the outlet side, secondary outlet ducts 4 are provided through which a filtered fluid 5 exits, said outlet ducts converging into an outlet main duct 102. Furthermore, a main discharge duct 103 is provided from which only discharge ducts 4' extend (Fig. 2). This arrangement makes it possible to temporarily stop the water inlet into filter 10 and to open a discharge valve 106 that is arranged along corresponding discharge duct 103, by means of dedicated valves 104 and 104', which are respectively arranged along inlet duct 2 and outlet duct 4, in such a way that the filtered water flows back and carries out the cleaning counter-washing step of filter cartridge 7 (Figs. 5 and 5').

Moreover, valves 104 and 104' are well-suited for a partial operation of filtering unit 100 in which, for instance, one or more serially arranged filters 10 can be used according to the flow rate of the fluid to be treated. Furthermore, such arrangement allows a reliable operation of the plant, since each filter 10 can be put out of line in case of failure or malfunction, the rest of plant 100 holding a continuous operation.

Fig. 2 shows an elevational side view of filtering unit 100 of Fig. 1 with a cross sectional view of filter 10. This representation highlights the arrangement of main inlet and outlet ducts 101, 102 from which separate inlet and outlet ducts 2,4 extend, which enter and exit into/from each filter 10, a flow adjustment step being provided by means of valves 104 and 104'. Furthermore, an arrangement is shown of main discharge duct 103 that is put downstream of the inlet duct 101, such that the residues, during the cleaning step, fall by gravity towards the discharge duct.

As better shown in the enlarged cross sectional view of Fig. 2', each filter 10 comprises a filtering chamber 1 with a duct or inlet mouth 2 through which fluid to be filtered 3 enters, and with a mouth or outlet duct 4 through which filtered fluid 5 flows.

Besides, filtering chamber 1 has a mouth or discharge duct 4' that is connected to main discharge duct 103, Fig. 2, which is used during filter backwashing operations.

In particular, filter 10 provides a filtering structure 40 that can be removed from filtering chamber 1 and is arranged within it. This structure comprises filter cartridge 7, which has an outer side surface 9 and an inner side surface 9' such that fluid to be filtered 3, which comes from inlet mouth 2, flows through filter cartridge 7, enters from outer side surface 9, exits from inner side surface 9' as filtered fluid 5 and then reaches outlet mouth 4.

In particular, filter cartridge 7 (see cross sectional view of Fig. 3) has a plurality of filtering passages 8 that retain residues 50 (Fig. 4) and prevent them from being dragged through, beyond outer side surface 9; residues 50 may comprise, for instance, paper fibres or threads that may be present in the fluid to be filtered 3.

In addition, a flow inversion may be obtained by means of valves 104 and 104', which are arranged along inlet and outlet ducts, and by means of valve 106, which is located along discharge duct 4' (in Figs. 1-2), in such a way that the fluid flows back temporarily, i.e. during cleaning operations, from outlet mouth 4 towards discharge mouth 4'.

Still with reference to Fig. 2', filter 10, according to the invention, is characterized by external scrapers 20, which are movable with respect to fixed cartridge 7, and are adapted to remove residues 50 from outer side surface 9 of filter cartridge 7, said external scrapers operated during the flow inversion step. In particular, scrapers 20 have a reciprocating movement that sweeps the whole cartridge outer surface 9, according to a sweeping direction 25. More in detail, scrapers 20 comprise a plurality of resiliently flexible blades 21 (Fig. 6) that come into contact with outer surface 9 and bend in such a way that an elastic reaction force is created that increases the scraping and residue-removing efficiency. The action that each flexible blade 21 produces on outer surface 9 of cartridge 7 and, in particular at each filtering passage 8, will be hereinafter described, more in detail.

Flow inversion and scrapers 20 movement inversion along outer surface 9 collaborate with each other to remove and to drag away residues 50 (diagrammatically shown in Figs. 4, 4' and 4") from cartridge 7, in particular at filtering passages 8. A further advantage is due to the offset position of scrapers 20, which do not reduce the fluid throughput within filter cartridge 7, therefore the cleaning efficiency of the fluid flow itself is not lowered. Moreover, filter construction is less complicated, since mechanisms need not to be built inside the filter.

Further advantageously, scrapers 20 movement inversion and flow inversion are carried out at the same time, in such a way that the overall cleaning step efficiency effect is improved with respect to the case of no synchronised inversions.

A further relevant aspect is that the alternated scraping speed of scrapers 20 along the outer side surface of filter cartridge 7 is set between 0.1 m/s and 0.8 m/s, preferably between 0.2 m/s and 0.6 m/s, in particular between 0.4 m/s and 0.5 m/s. This way, the scraping action is very effective, since an ideal compromise is created with respect to the friction between scrapers 20 and the outer side surface of cartridge 7.

Besides, and further advantageously, the flexible blades of scrapers 20 can move from a working position B (Fig. 5'), in which they engage with filter cartridge 7 outer side surface, to a resting position (Fig. 2') in which scrapers 20 are disengaged with respect to filter cartridge 7.

In particular, scrapers 20, when at the resting position A, can engage with a recess 90 (Fig. 2') that has a diameter which is shorter than the outer side surface diameter of the filter cartridge. This way, the resilient blades recover their original position and shape, without undergoing a permanent deformation, which would make them less resilient and less effective. In other words, the resiliently flexible blades, at the resting position, do not acquire any deformation due to forced contact with the filter cartridge outer side surface. Therefore, the resiliently flexible elements, when in use, are always effective to remove the residues that have piled up on the filter. In addition, this arrangement allows a remarkable useful life prolongation of such blades and so of scrapers 20.

Fig. 2' shows, furthermore, an actuating means 27 that actuates alternated movement 25 of scrapers 20. In particular, the actuating means has a sliding guide 26 whose axis is substantially parallel to the axis of filter cartridge 7, which controls the plurality of blades 21 along the outer surface 7'. This allows a close passage along cartridge outer surface 9 and therefore a higher residues 50 removal efficiency as well as an even wear of blades 21, which is due to alternated movement 25. The latter effect will be described hereinafter, with reference to Figs. 4, 4' and 4".

Fig. 3 shows a cross sectional view of filter cartridge 7, which comprises a triangular cross-section portion 17 that forms a spiral member and is kept stiff by a plurality of spacers 18, in such a way that a plurality of slits or filtering passages 8 are formed at a prefixed distance from one another. The filtering cartridge capacity and, therefore, the width of each filtering passage 8 generally depends on the applications for which it is intended.

Figs. 4, 4' and 4" show the effect that is caused by a single blade 21 on outer surface 7' of filter cartridge 7, as shown in Fig. 3. In particular, Fig. 4 shows a first step in which blade 21 slides downwards and acts with interference with outer surface 7', bending against it. This position causes an elastic reaction force that is normal to outer surface 7', such that the co-operation with alternated movement 25 causes a full cleaning of the outer surface of cartridge 7. This effect is equally effective at filtering passage 8, as shown in Fig. 4" and in enlarged view 4". When blades 21 reach filtering passage 8, a resilient click and a subsequent hit are produced against nearby portion 17 of cartridge 7, which shakes piled-up residues 50 off and clears filtering passage 8. The contemporaneous fluid flow inversion completes the removal of residues and assists the removed residues to be dragged away towards discharge mouth 4'.

On the other hand, with reference to the construction features, the above described arrangement has remarkable advantages in terms of blade wear and useful life. The first effect is due to the reciprocation 25 of blades 21, which causes an even and homogeneous wear of blades 21, since it balances the opposite forces that act during the forward- and back stroke scrapers 20. The second effect, instead, is due to the interference between blades 21 and cartridge 7 outer surface walls, which is achieved by means of a difference between cartridge 7 diameter and the diameter of scraping edge 21' of blades 21 (Fig. 5).

Fig. 5 shows a cross sectional view of filtering chamber 1, where backwashing flow of filter cartridge 7 is schematically represented. In particular, the backwashing flow is caused by closing valve 104 (Figs. 1-2) of fluid inlet duct 2 and by opening valve 106 of discharge duct 4'. This way, the fluid enters through inlet mouth 4 and temporarily flows from cartridge 7 inner surface 9' towards outer surface 9, in such a way that a partial detachment occurs of residues 50 which have piled up on outer surface 9. The cooperation between external scraper 20, as shown in subsequent Fig. 5', with the above-described flow inversion fully removes residues 50 and restores cartridge 7 original filtering effectiveness and efficacy.

More in detail Fig. 5' shows, contemporaneous operation of scrapers 20 and flow inversion. A carriage 20', on which scrapers 20 are integrally mounted, performs alternated movement 25 within filtering chamber 1, more precisely, a forward stroke and a back stroke are carried out along cartridge 7, thus sweeping the whole surface of it. Concerning the actuating principle, carriage 20' is moved by an actuator (not shown) that is arranged connected at a remote position of a stem 29. Besides, a sliding guide 26 is provided that is slidingly connected to carriage 20' by means of a sleeve 26'. This way, carriage 20' can slide precisely along guide 26, therefore external scrapers 20 can have an effective cleaning action on cartridge outer surface 9; besides, a limited and even scrapers consumption is guaranteed. Furthermore, Fig. 5' shows that an upper portion 7' of cartridge 7 is not covered by residues 50 that have been removed owing to the cooperative effect of scrapers 20 operation and flow inversion, while residues 50 are still adherent to a lower portion 7" of cartridge 7.

Fig. 6 shows a detailed view of a single blade 21 that has a scraping edge 21' whose diameter is shorter than cartridge 7 diameter, such that the above-described objects can be achieved, and has a plurality of radial cuts 21". The radial cuts improve flexibility, and therefore increase scrapers 20 useful life.

Advantageously, as shown in Fig. 7, blades 21 are arranged next to each other on a same plane, such that they form a series of blades that sweeps all around filter cartridge 7 surface, and are spaced apart from one another by a spacing blade 23, in such a way that they form a pack of blades. At the resting position, in particular, the blades rest on a supporting portion 36'. A multiple scraping action is therefore carried out along cartridge 7 outer surface 9. Besides, blades 21 are shifted from each other, such that radial cuts 21" do not cause discontinuities. Furthermore, Fig. 7 shows a fastening seat 35 that is suitable for joining cartridge 7, which is partially shown in dotted line, and a bevel portion 36 that serves to draft blades 21 to a bent position, in such a way that the cleaning step can completed on the whole outer surface 9 of filter cartridge 7.

Fig. 8 shows a perspective view of filtering structure 40 that can be removed from filtering chamber 1, which comprises fastening seat 35 for filter cartridge 7, scrapers 20 and the actuating means 27 of scrapers 20. The possibility of removing structure 40 from filtering chamber 1, by simply disassembling a flange 41, assists maintenance and/or components replacement, as well as filtering chamber 1 cleaning operations.

According to a method aspect, the cleaning steps of filter cartridge 7 provide introducing the fluid to be filtered 3 into filtering chamber 1 through inlet mouth 2, and finally extracting filtered fluid 5 through outlet mouth 4. In particular, intermediate steps are provided in which the fluid to be filtered 3 is caused to pass through filter cartridge 7, i.e. through its outer side surface 9 and inner side surface 9' in such a way that the fluid to be filtered 3 enters through outer side surface 9 and exits through inner side surface 9' as filtered fluid 5, and then achieves outlet mouth 4. The cleaning step provides, instead, reverting the fluid flow in such a way that it temporarily flows from outlet mouth 4 towards discharge mouth 4', while a scraping step is carried out for removing residues 50 that have piled up on filter cartridge 7 outer side surface 9. In particular, scraping step provides that flexible blades 21 are brought into contact with outer surface 9 and bends to remove residues 50 that have piled up on filter cartridge 7.

Finally, it is useful to highlight a few advantageous aspects of the cleaning device, according to the invention. First of all, the device allows saving water or any other process fluid, which the goal of a smaller and less bulky wastewater treatment plant; besides, economical advantages arise that are related to both saving and higher productivity and reliability of the plant to which the filter is connected.

The foregoing description of a specific embodiment will so fully reveal the invention according to the conceptual point of view, such that others, by applying current knowledge, will be able to modify and/or adapt for various applications such embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A fluid filter (10) comprising:
- a filtering chamber (1) having an inlet mouth (2) through which a fluid to be filtered (3) is introduced and an outlet mouth (4) through which a filtered fluid (5) exits;
- a filter cartridge (7) that has an outer side surface (9) and an inner side surface (9'), said cartridge arranged in said filtering chamber (1) such that said fluid to be filtered (3), which comes from said inlet mouth (2), passes through said filter cartridge (7) entering from said outer side surface (9) and exiting from said inner side surface (9') as filtered fluid (5), eventually reaching said outlet mouth (4), said cartridge having a plurality of filtering passages (8) that are sized such that residues present in said fluid to be filtered (3) do not pass and are blocked on said outer side surface (9),
- a flow-reversing means for reversing a flow of said fluid such that, in a cleaning step, said fluid temporarily comes from said outlet mouth (4) and passes through said filter cartridge (7) in a direction that extends from said inner side surface (9') towards said outer side surface (9) in order to cause a partial disengagement of the residues (50) from said outer side surface (9);
wherein an external scraping means (20) is provided, said external scraping means (20) movable with respect to said filter cartridge (7), wherein said scraping means (20) is adapted to perform an alternate scraping movement (25) according to two opposite directions along said outer side surface (9), said scraping means (20) adapted to co-operate with said flow-reversing means in such a way that said residues (50), which are piled up on said outer surface of said filter cartridge (7) are completely detached from said outer surface,
wherein said scraping means (20) comprises a plurality of resiliently flexible elements (21) that are arranged in contact with said outer surface (9) in order to resiliently bend thus developing a resilient force that increases the scraping efficiency for removing said residues (50),
said plurality of resiliently flexible elements are a plurality of scraping blades (21) formed as a scraping blade tool;
said flexible overlapping blades have radial cuts (21)" that are shifted from each other, to prevent discontinuity in the scraping action,
**characterised in that**
said scraping blades (21) of said scraping blade tool have a scraping edge (21') whose diameter is shorter than a filter cartridge (7) diameter, and are arranged in such a way that an elastic reaction force that is normal to said outer surface (7') of said filter cartridge (7) is generated that, when said blades (21) reach said filtering passages (8), provide a resilient click and a subsequent hit of said scraping edge (21') against a nearby portion (17) of said cartridge (7), shaking piled-up residues (50) off and clearing said filtering passage (8).

2. A fluid filter (10), according to claim 1, wherein the speed of said alternated scraping movement, with which said flexible elements (21) move on said filter cartridge (7), is set between 0.1 m/s and 0.8 m/s, preferably between 0.2 m/s and 0.6 m/s, in particular between 0.4 m/s and 0.5 m/s.

3. A fluid filter (10), according to claim 1, wherein said plurality of resiliently flexible elements (21) is adapted to move:
- from a working position (B), in which said flexible elements (21) are brought into contact with said outer side surface (9) of said filter cartridge (7),
- to a resting position (A), in which said plurality of elements (21) is disengaged from said filter cartridge (7).

4. A fluid filter (10), according to claim 3, wherein in said resting position said plurality of resiliently flexible elements (21) is adapted to engage with a recess (90) that has a diameter which is shorter than the diameter of said outer side surface (9) of said filter cartridge (7).

5. A fluid filter (10), according to claim 1, wherein said filtering chamber (1) has, furthermore, a discharge mouth (4') such that, while said flow is reversed, said fluid passes through said outlet mouth (4) towards said discharge mouth (4').

6. A fluid filter (10), according to claim 1, wherein said scraping means are operated immediately before or contemporaneously to said fluid-reversing means.

7. A fluid filter (10), according to claim 1, wherein said plurality of resiliently flexible elements (21) are blades that are overlapped to form a pack, such that a multiple scraping is possible along said outer side surface (9) of said cartridge, in particular said blades are arranged next to each other on a same plane, to sweep all around said filter cartridge (7).

8. A fluid filter (10), according to any of claims from 1 to 6, wherein said filter cartridge (7) has a cylindrical shape and said blades (21) define said scraping blade tool as a substantially circular scraping blade tool that has a circular scraping edge (21') whose diameter is shorter than said filter cartridge (7) diameter.

9. A fluid filter (10), according to claim 1, wherein said scraping movement of said scraping means is carried out by an actuating means (27), a scraping means-holding carriage being provided that is operated by said actuating means (27), a sliding guide (26) being also provided whose axis is substantially parallel to said filter cartridge (7) axis that guides said carriage and said plurality of blades (21) along said outer surface (9) of said filter cartridge (7).

10. A method for cleaning a fluid filter (10) comprising the steps of:
- introducing a fluid to be filtered (3) in a filtering chamber (1) through an inlet mouth (2) and discharging a filtered fluid (5) through an outlet mouth (4);
- causing said fluid to be filtered (3) to pass through a filter cartridge (7) that has an outer side surface (9) and an inner side surface (9'), said cartridge arranged in said filtering chamber (1) such that said fluid to be filtered (3), which comes from said inlet mouth (2), enters from said outer side surface (9) and exits from said inner side surface (9') as filtered fluid (5) and reaches then said outlet mouth (4), said cartridge having a plurality of filtering passages (8) to retain on said outer side surface (9) residues (50) that are present in said fluid to be filtered (3),
- reversing the flow of said filtered fluid (5) such that, in a cleaning step, said filtered fluid (5) temporarily comes from said outlet mouth (4) and passes through said filter cartridge (7) in a direction that extends from said inner side surface (9') towards said outer side surface (9);
wherein a step is provided of external scraping, said external scraping means (20) movable with respect to said filter cartridge (7), wherein said scraping step is carried out as an alternated scraping movement according to two opposite directions along said outer side surface (9), said scraping step adapted to co-operate with said flow-reversing step in such a way that said residues (50), which are piled up on said outer surface of said filter cartridge (7), are detached from said outer surface,
**characterised in that** said scraping step provides that a plurality of resiliently flexible elements (21) are brought into contact with said outer surface and that said resiliently flexible elements (21) of said scraping blade tool have a scraping edge (21') whose diameter is shorter than a filter cartridge (7) diameter and provide a bending movement that develops an elastic reaction force normal to the outer surface (7') of said filter cartridge (7) such that, when said blades (21) reach said filtering passages (8), provide a resilient click and a subsequent hit of said scraping edge (21') against a nearby portion (17) of said cartridge (7), shaking piled-up residues (50) off and clearing said filtering passage (8) increasing the residue-removing efficiency of said scraping step.

11. A method for cleaning a fluid filter (10), according to claim 8, wherein said scraping step, during which said flexible elements move on said filter cartridge (7), is carried out at a speed set between 0.1 m/s and 0.8 m/s, preferably between 0.2 m/s and 0.6 m/s, in particular between 0.4 m/s and 0.5 m/s.

12. A method for cleaning a fluid filter (10), according to claim 8, wherein a working step is provided, in which said resiliently flexible elements (21) engage with said outer side surface (9) of said filter cartridge (7), and a resting step is also provided in which said plurality of elements is disengaged from said filter cartridge (7).

13. A method for cleaning a fluid filter (10), according to claim 8, wherein said flow-reversing step is carried out through said outlet mouth (4) towards a discharge mouth that is made in said filtering chamber (1).

14. A method for cleaning a fluid filter (10), according to claim 8, wherein said scraping step is carried out immediately before or contemporaneously to said fluid flow-reversing step.

## Patentansprüche

1. Ein Flüssigkeitsfilter (10), der Folgendes beinhaltet:
- eine Filtrierkammer (1), die einen Einlassmund (2), durch den eine Flüssigkeit, die zu filtrieren ist (3), eingeleitet wird, und einen Auslassmund (4), durch den eine gefilterte Flüssigkeit (5) austritt, aufweist;
- eine Filterpatrone (7), die eine Außenseitenoberfläche (9) und eine Innenseitenoberfläche (9') aufweist, wobei die Filterpatrone in der Filtrierkammer (1) so angeordnet ist, dass die Flüssigkeit, die zu filtrieren ist (3), die von dem Einlassmund (2) kommt, durch die Filterpatrone (7) geht, wobei sie von der Außenseitenoberfläche (9) eintritt und von der Innenseitenoberfläche (9') als gefilterte Flüssigkeit (5) austritt, schließlich den Auslassmund (4) erreichend, wobei die Patrone eine Vielzahl von Filtrierdurchgängen (8) aufweist, die so bemessen sind, dass in der Flüssigkeit, die zu filtrieren ist (3), vorhandene Rückstände nicht durchgehen und an der Außenseitenoberfläche (9) blockiert werden,
- ein Flussumkehrmittel zum Umkehren eines Flusses der Flüssigkeit, so dass, in einem Reinigungsschritt, die Flüssigkeit temporär vom Auslassmund (4) kommt und durch die Filterpatrone (7) in eine Richtung geht, die sich von der Innenscitenoberflache (9') zur Außenseitenoberfläche (9) hin erstreckt, um eine teilweise Loslösung der Rückstände (50) von der Außenseitenoberfläche (9) zu bewirken;
wobei ein externes Abstreifmittel (20) bereitgestellt ist, wobei das externe Abstreifmittel (20) in Bezug auf die Filterpatrone (7) beweglich ist, wobei das Abstreifmittel (20) angepasst ist, um eine alternierende Abstreifbewegung (25) gemäß zwei entgegengesetzten Richtungen entlang der Außenseitenoberfläche (9) durchzuführen, wobei das Abstreifmittel (20) angepasst ist, um mit dem Flussumkehrmittel in einer Weise zusammenzuarbeiten, dass die Rückstände (50), die an der Außenoberfläche der Filterpatrone (7) angehäuft sind, von der Außenoberfläche vollständig abgelöst werden,
wobei das Abstreifmittel (20) eine Vielzahl von federnd flexiblen Elementen (21) beinhaltet, die in Kontakt mit der Außenseitenoberfläche (9) angeordnet sind, um sich federnd zu biegen, wodurch eine Federkraft entwickelt wird, die die Abstreifeffizienz zum Entfernen der Rückstände (50) erhöht,
wobei die Vielzahl von federnd flexiblen Elementen eine Vielzahl von Abstreifklingen (21) ist, die als Abstreifklingenwerkzeug ausgebildet sind;
wobei die flexiblen überlappenden Klingen radiale Einschnitte (21)" aufweisen, die voneinander versetzt sind, um eine Unterbrechung des Abstreifvorgangs zu vermeiden,
**dadurch gekennzeichnet, dass**
die Abstreifklingen (21) des Abstreifklingenwerkzeugs eine Abstreifkante (21') aufweisen, deren Durchmesser kürzer als ein Durchmesser der Filterpatrone (7) ist, und in einer Weise angeordnet sind, dass eine elastische Reaktionskraft, die zur Außenoberfläche (7') der Filterpatrone (7) normal ist, erzeugt wird, wenn die Klingen (21) die Filtrierdurchgänge (8) erreichen, einen federnden Klick und einen anschließenden Schlag der Abstreifkante (21') gegen einen nahen Abschnitt (17) der Patrone (7) bereitstellen, wobei angehäufte Rückstände (50) abgeschüttelt werden und der filtrierdurchgang (8) geräumt wird.

2. Flüssigkeitsfilter (10), gemäß Anspruch 1, wobei die Geschwindigkeit der alternierenden Abstreifbewegung, mit der sich die flexiblen Elemente (21) an der Filterpatrone (7) bewegen, zwischen 0,1 m/s und 0,8 m/s, vorzugsweise zwischen 0,2 m/s und 0,6 m/s, insbesondere zwischen 0,4 m/s und 0,5 m/s, eingestellt ist.

3. Flüssigkeitsfilter (10), gemäß Anspruch 1, wobei die Vielzahl der federnd flexiblen Elemente (21) angepasst ist, um sich:
- aus einer Arbeitsstellung (B), in der die flexiblen Elemente (21) mit der Außenseitenoberfläche (9) der Filterpatrone (7) in Kontakt gebracht werden,
- in eine Rubestellung (A) zu bewegen, in der die Vielzahl von Elementen (21) von der Filterpatrone (7) losgelöst ist.

4. Flüssigkeitsfilter (10), gemäß Anspruch 3, wobei in der Ruhestellung die Vielzahl der federnd flexiblen Elemente (21) angepasst ist, um mit einer Aussparung (90) in Eingriff zu gelangen, die einen Durchmesser aufweist, der kürzer als der Durchmesser der Außenseitenoberfläche (9) der Filterpatrone (7) ist.

5. Flüssigkeitsfilter (10), gemäß Anspruch 1, wobei die Filtrierkammer (1) außerdem einen Ausgabemund (4') aufweist, so dass, während der Fluss umgekehrt ist, die Flüssigkeit durch den Auslassmund (4) zum Ausgabemund (4') hin geht.

6. Flüssigkeitsfilter (10), gemäß Anspruch 1, wobei das Abstreitmittel unmittelbar vor oder gleichzeitig mit dem Flüssigkeitsumkehrmittel betrieben wird.

7. Flüssigkeitsfilter (10), gemäß Anspruch 1, wobei die Vielzahl von federnd flexiblen Elementen (21) Klingen sind, die überlappt sind, um ein Paket auszubilden, so dass ein mehrfaches Abstreifen entlang der Außenseitenoberfläche (9) der Patrone möglich ist, wobei die Klingen insbesondere nebeneinander auf einer gleichen Ebene angeordnet sind, um um die ganze Filterpatrone (7) herum zu streichen.

8. Flussigkeitsfilter (10), gemäß einem der Ansprüche 1 bis 6, wobei die Filterpatrone (7) eine zylindrische Form aufweist und die Klingen (21) das Abstreifklingenwerkzeug als ein im Wesentlichen kreisförmiges Abstreifklingenwerkzeug definieren, das eine kreisförmige Abstreifkante (21') aufweist, deren Durchmesser kürzer als der Durchmesser der Fillerpatrone (7) ist.

9. Flüssigkeitsfilter (10), gemäß Anspruch 1, wobei die Abstreifbewegung des Abstreifmittels durch ein Betätigungsmittel (27) ausgeführt wird, wobei ein Abstreifmittel-Haltewagen bereitgestellt ist, der durch das Betätigungsmittel (27) betrieben wird, wobei auch eine Gleitführung (26) bereitgestellt ist, deren Achse im Wesentlichen parallel zur Achse der Filterpatrone (7) ist, die den Wagen und die Vielzahl von Klingen (21) entlang der Außenoberfläche (9) der Filterpatrone (7) führt.

10. Ein Verfahren zur Reinigung eines Flüssigkeitsfilters (10), das die folgenden Schritte beinhaltet:
- Einleiten einer Flüssigkeit, die zu filtrieren ist (3), in eine Filtrierkammer (1) durch einen Einlassmund (2) und Abgeben einer gefilterten Flüssigkeit (5) durch einen Auslassmund (4);
- Bewirken, dass die Flüssigkeit, die zu filtrieren ist (3), durch eine Filterpatrone (7) geht, die eine Außenseitenoberfläche (9) und eine Innenseitenoberfläche (9') aufweist, wobei die Filterpatrone in der Filtrierkammer (1) so angeordnet ist, dass die Flüssigkeit, die zu filtrieren ist (3), die von dem Einlassmund (2) kommt, von der Außenseitenoberfläche (9) eintritt und von der Innenseitenoberfläche (9') als gefilterte Flüssigkeit (5) austritt und den Auslassmund (4) erreicht, wobei die Patrone eine Vielzahl von Filtrierdurchgängen (8) aufweist, um an der Außenseitenoberfläche (9) Rückstände (50) festzuhalten, die in der Flüssigkeit, die zu filtrieren ist (3), vorhanden sind,
- Umkehren des Flusses der gefilterten Flüssigkeit (5), so dass, in einem Reinigungsschritt, die gefilterte Flüssigkeit (5) temporär vom Auslassmund (4) kommt und durch die Filterpatrone (7) in eine Richtung geht, die sich von der Innenseitenoberfläche (9') zur Außenseitenoberfläche (9) hin erstreckt;
wobei ein Schritt des externen Abstreifens bereitgestellt ist, wobei das externe Abstreifmittel (20) in Bezug auf die Filterpatrone (7) beweglich ist, wobei der Abstreifschritt als eine alternierende Abstreifbewegung gemäß zwei entgegengesetzten Richtungen entlang der Außenseitenoberfläche (9) ausgeführt wird, wobei der Abstreifschritt angepasst ist, um mit dem Flussumkehrschritt in einer Weise zusammenzuarbeiten, dass die Rückstände (50), die an der Außenoberfläche der Filterpatrone (7) angehäuft sind, von der Außenoberfläche abgelöst werden,
**dadurch gekennzeichnet, dass** der Abstreifschritt bereitstellt, dass eine Vielzahl von federnd flexiblen Elementen (21) mit der Außenseitenoberfläche in Kontakt gebracht werden und dass die federnd flexiblen Elemente (21) des Abstreifklingenwerkzeugs eine Abstreifkante (21') aufweisen, deren Durchmesser kürzer als ein Durchmesser der Filterpatrone (7) ist, und ein Biegemoment bereitstellen, das eine elastische Reaktionskraft, die zur Außenoberfläche (7') der Filterpatrone (7) normal ist, entwickelt, so dass, wenn die Klingen (21) die Filtrierdurchgänge (8) erreichen, ein federnder Klick und ein anschließender Schlag der Abstreifkante (21') gegen einen nahen Abschnitt (17) der Patrone (7) bereitgestellt wird, wobei angehäufte Rückstände (50) abgeschüttelt werden und der Filtrierdurchgang (8) geräumt wird, wodurch die Rückstandsentfernungseffizienz des Abstreifschritts erhöht wird.

11. Verfahren zur Reinigung eines Flüssigkeitsfilters (10), gemäß Anspruch 8, wobei der Abstreifschritt, während dem sich die flexiblen Elemente an der Filterpatrone (7) bewegen, mit einer Geschwindigkeit ausgeführt wird, die zwischen 0,1 m/s und 0,8 m/s, vorzugsweise zwischen 0,2 m/s und 0,6 m/s, insbesondere zwischen 0,4 m/s und 0,5 m/s, eingestellt ist.

12. Verfahren zur Reinigung eines Flüssigkeitsfilters (10), gemäß Anspruch 8, wobei ein Arbeitsschritt bereitgestellt ist, bei dem die federnd flexiblen Elemente (21) mit der Außenseitenoberfläche (9) der Filterpatrone (7) in Eingriff gelangen, und auch ein Ruheschritt bereitgestellt ist, bei dem die Vielzahl von Elementen von der Filterpatrone (7) losgelöst ist.

13. Verfahren zur Reinigung eines Flüssigkeitsfilters (10), gemäß Anspruch 8, wobei der Flussumkehrschritt durch den Auslassmund (4) zu einem Ausgabemund hin ausgeführt wird, der in der Filtrierkammer (1) hergestellt ist,

14. Verfahren zur Reinigung eines Flüssigkeitsfilters (10), gemäß Anspruch 8, wobei der Abstreifschritt unmittelbar vor oder zeitgleich mit dem Flüssigkeitsflussumkehrschritt ausgeführt wird.

## Revendications

1. Un filtre à fluide (10) comprenant :
- une chambre de filtrage (1) possédant une embouchure d'admission (2) au travers de laquelle un fluide à filtrer (3) est introduit et une embouchure de sortie (4) au travers de laquelle un fluide filtré (5) sort,
- une cartouche de filtrage (7) qui possède une surface latérale extérieure (9) et une surface latérale intérieure (9'), ladite cartouche étant agencée dans ladite chambre de filtrage (1) de sorte que ledit fluide à filtrer (3), qui vient de ladite embouchure d'admission (2), passe au travers de ladite cartouche de filtrage (7) entrant par ladite surface latérale extérieure (9) et sortant par ladite surface latérale intérieure (9') sous la forme d'un fluide filtré (5) pour atteindre finalement ladite embouchure de sortie (4), ladite cartouche possédant une pluralité de passages de filtrage (8) qui sont dimensionnés de sorte que des résidus présents dans ledit fluide à filtrer (3) ne passent pas et soient bloqués sur ladite surface latérale extérieure (9),
- un moyen d'inversion de flux destiné à inverser un flux dudit fluide de sorte que, dans une opération de nettoyage, ledit fluide vient temporairement de ladite embouchure de sortie (4) et passe au travers de ladite cartouche de filtrage (7) dans une direction qui s'étend de ladite surface latérale intérieure (9') vers ladite surface latérale extérieure (9) afin de provoquer un désengagement partiel des résidus (50) de ladite surface latérale extérieure (9),
où un moyen de raclage externe (20) est fourni, ledit moyen de raclage externe (20) étant déplaçable par rapport à ladite cartouche de filtrage (7), où ledit moyen de raclage (20) est adapté de façon à exécuter un mouvement de raclage alterné (25) selon deux directions opposées le long de ladite surface latérale extérieure (9), ledit moyen de raclage (20) étant adapté de façon à coopérer avec ledit moyen d'inversion de flux de sorte que lesdits résidus (50), qui sont empilés sur ladite surface extérieure de ladite cartouche de filtrage (7), soient totalement détachés de ladite surface extérieure,
où ledit moyen de raclage (20) comprend une pluralité d'éléments élastiquement flexibles (21) qui sont agencés en contact avec ladite surface extérieure (9) afin de se plier de manière élastique, développant ainsi une force élastique qui augmente l'efficacité de raclage en vue d'éliminer lesdits résidus (50),
ladite pluralité d'éléments élastiquement flexibles est une pluralité de lames de raclage (21) formées sous la forme d'un outil à lames de raclage,
lesdites lames flexibles en chevauchement possèdent des découpes radialcs(21)" qui sont décalées les unes des autres de façon à prévenir une discontinuité dans l'action de raclage,
**caractérisé en ce que**
lesdites lames de raclage (21) dudit outil à lames de raclage possèdent une bordure de raclage (21') dont le diamètre est inférieur au diamètre d'une cartouche de filtrage (7) et sont agencées de telle manière qu'une force de réaction élastique qui est perpendiculaire à ladite surface extérieure (7') de ladite cartouche de filtrage (7) soit générée qui, lorsque lesdites lames (21) atteignent lesdits passages de filtrage (8), fournissent un claquement élastique et une frappe subséquente de ladite bordure de raclage (21') contre une partie voisine (17) de ladite cartouche (7), éliminant par une secousse des résidus empilés (50) et dégageant ledit passage de filtrage (8).

2. Un filtre à fluide (10) selon la Revendication 1, où la vitesse dudit mouvement de raclage alterné, avec lequel lesdits éléments flexibles (21) se déplacent sur ladite cartouche de filtrage (7), est définie entre 0,1 m/s et 0,8 m/s, de préférence entre 0,2 m/s et 0,6 m/s, plus particulièrement entre 0,4 m/s et 0,5 m/s.

3. Un filtre à fluide (10) selon la Revendication 1, où ladite pluralité d'éléments élastiquement flexibles (21) est adaptée de façon à se déplacer :
- d'une position de travail (B), dans laquelle lesdits éléments flexibles (21) sont placés en contact avec ladite surface latérale extérieure (9) de ladite cartouche de filtrage (7),
- vers une position de repos (A), dans laquelle ladite pluralité d'éléments (21) est désengagée de ladite cartouche de filtrage (7).

4. Un filtre à fluide (10) selon la Revendication 3, où, dans ladite position de repos, ladite pluralité d'éléments élastiquement flexibles (21) est adaptée de façon à entrer en prise avec un évidement (90) qui possède un diamètre qui est inférieur au diamètre de ladite surface latérale extérieure (9) de ladite cartouche de filtrage (7).

5. Un filtre à fluide (10) selon la Revendication 1, où ladite chambre de filtrage (1) possède en outre une embouchure de décharge (4') de sorte que, lorsque ledit flux est inversé, ledit fluide passe au travers de ladite embouchure de sortie (4) vers ladite embouchure de décharge (4').

6. Un filtre à fluide (10) selon la Revendication 1, où ledit moyen de raclage est actionné immédiatement avant ou en même temps que ledit moyen d'inversion de fluide.

7. Un filtre à fluide (10) selon la Revendication 1, où ladite pluralité d'éléments élastiquement flexibles (21) sont des lames qui sont en chevauchement de façon à former un ensemble, de sorte qu'un raclage multiple soit possible le long de ladite surface latérale extérieure (9) de ladite cartouche, plus particulièrement lesdites lames sont agencées les unes à côté des autres sur un même plan, de façon à balayer tout l'environnement de ladite cartouche de filtrage (7).

8. Un filtre à fluide (10) selon l'une quelconque des Revendications 1 à 6, où ladite cartouche de filtrage (7) possède une forme cylindrique et lesdites lames (21) définissent ledit outil à lames de raclage sous la forme d'un outil à lames de raclage sensiblement circulaire qui possède une bordure de raclage circulaire (21') dont le diamètre est inférieur au diamètre de ladite cartouche de filtrage (7).

9. Un filtre à fluide (10) selon la Revendication 1, où ledit mouvement de raclage dudit moyen de raclage est exécuté par un moyen d'actionnement (27), un chariot de support de moyen de raclage étant fourni qui est actionné par ledit moyen d'actionnement (27), un guide coulissant (26) étant également fourni dont l'axe est sensiblement parallèle à l'axe de ladite cartouche de filtrage (7) qui guide ledit chariot et ladite pluralité de lames (21) le long de ladite surface extérieure (9) de ladite cartouche de filtrage (7).

10. Un procédé de nettoyage d'un filtre à fluide (10) comprenant les opérations suivantes :
l'introduction d'un fluide à filtrer (3) dans une chambre de filtrage (1) au travers d'une embouchure d'admission (2) et la décharge d'un fluide filtré (5) au travers d'une embouchure de sortie (4),
- le fait d'amener ledit fluide à filtrer (3) à passer au travers d'une cartouche de filtrage (7) qui possède une surface latérale extérieure (9) et une surface latérale intérieure (9'), ladite cartouche étant agencée dans ladite chambre de filtrage (1) de sorte que ledit fluide à filtrer (3), qui vient de ladite embouchure d'admission (2), entre par ladite surface latérale extérieure (9) et sorte par ladite surface latérale intérieure (9') sous la forme d'un fluide filtré (5) et atteigne ensuite ladite embouchure de sortie (4), ladite cartouche possédant une pluralité de passages de filtrage (8) destinés à retenir sur ladite surface latérale extérieure (9) des résidus (50) qui sont présents dans ledit fluide à filtrer (3),
- l'inversion du flux dudit fluide filtré (5) de sorte que, dans une opération de nettoyage, ledit fluide filtré (5) vienne temporairement de ladite embouchure de sortie (4) et passe au travers de ladite cartouche de filtrage (7) dans une direction qui s'étend de ladite surface latérale intérieure (9') vers ladite surface latérale extérieure (9),
où une opération de raclage externe est prévue, ledit moyen de raclage externe (20) étant déplaçable par rapport à ladite cartouche de filtrage (7), où ladite opération de raclage est exécutée sous la forme d'un mouvement de raclage alterné selon deux directions opposées le long de ladite surface latérale extérieure (9), ladite opération de raclage étant adaptée de façon à coopérer avec ladite opération d'inversion de flux de sorte que lesdits résidus (50), qui sont empilés sur ladite surface extérieure de ladite cartouche de filtrage (7), soient détachés de ladite surface extérieure,
**caractérisé en ce que** ladite opération de raclage fait en sorte qu'une pluralité d'éléments élastiquement flexibles (21) soient placés en contact avec ladite surface extérieure et que lesdits éléments élastiquement flexibles (21) dudit outil à lames de raclage possèdent une bordure de raclage (21') dont le diamètre est inférieur au diamètre d'une cartouche de filtrage (7) et fournissent un mouvement de courbure qui développe une force de réaction élastique perpendiculaire à la surface extérieure (7') de ladite cartouche de filtrage (7) de sorte que, lorsque lesdites lames (21) atteignent lesdits passages de filtrage (8), fournissent un claquement élastique et une frappe subséquente de ladite bordure de raclage (21') contre une partie voisine (17) de ladite cartouche (7), éliminant par une secousse des résidus empilés (50) et dégageant ledit passage de filtrage (8), augmentant ainsi l'efficacité d'élimination de résidus de ladite opération de raclage.

11. Un procédé de nettoyage d'un filtre à fluide (10) selon la Revendication 8, où ladite opération de raclage, au cours de laquelle lesdits éléments flexibles se déplacent sur ladite cartouche de filtrage (7), est exécutée à une vitesse définie entre 0,1 m/s et 0,8 m/s, de préférence entre 0,2 m/s et 0,6 m/s, plus particulièrement entre 0,4 m/s et 0,5 m/s.

12. Un procédé de nettoyage d'un filtre à fluide (10) selon la Revendication 8, où une opération de travail est prévue, dans laquelle lesdits éléments élastiquement flexibles (21) entrent en prise avec ladite surface latérale extérieure (9) de ladite cartouche de filtrage (7), et une opération de repos est également prévue dans laquelle ladite pluralité d'éléments est désengagée de ladite cartouche de filtrage (7).

13. Un procédé de nettoyage d'un filtre à fluide (10) selon la Revendication 8, où ladite opération d'inversion de flux est exécutée au travers de ladite embouchure de sortie (4) vers une embouchure de décharge qui est placée dans ladite chambre de filtrage (1).

14. Un procédé de nettoyage d'un filtre à fluide (10) selon la Revendication 8, où ladite opération de raclage est exécutée immédiatement avant ou en même temps que ladite opération d'inversion de flux.
